# EUROPÄISCHE PATENTSCHRIFT

(11) **EP 0 940 606 B1**
(45) Veröffentlichungstag und Bekanntmachung des Hinweises auf die Patenterteilung: **07.05.2003**
(21) Anmeldenummer: 99101647.8
(22) Anmeldetag: 05.02.1999
(51) Int. Cl.: F16H 63/34

(54) **Arretiervorrichtung für ein Getriebe**
Locking device for a transmission
Dispositif d'arrêt pour une transmission

(30) Priorität: 05.03.1998 DE 19809424
(43) Veröffentlichungstag der Anmeldung: 08.09.1999
(73) Patentinhaber: Volkswagen Aktiengesellschaft, 38436 Wolfsburg (DE)
(72) Erfinder: Gruss, Roland, Dipl.-Ing., 38477 Jembke (DE); Spanier, Michael, 38108 Braunschweig (DE); Briske, Karsten, 38114 Braunschweig (DE)

(56) Entgegenhaltungen:
- DE-A- 4 441 138
- DE-A- 19 540 039

## Beschreibung

Die Erfindung betrifft eine Arretiervorrichtung für ein Getriebe, insbesondere für ein Kraftfahrzeuggetriebe, mit einem in einem Getriebegehäuse angeordneten Arretierstift, welcher wahlweise gegen eine Kraft einer Vorspannvorrichtung in das Getriebegehäuse hinein in eine Ausnehmung eines beweglichen Getriebeteils einschiebbar ist, gemäß dem Oberbegriff des Anspruchs 1.

Zum erstmaligen Einstellen eines Getriebes und zum Anschließen einer äußeren Getriebeschaltvorrichtung, wie einen Schalthebel mit entsprechendem Gestänge oder Zügen, müssen die beweglichen Teile des Getriebes bzw. der Schaltvorrichtung in eine vorbestimmte Stellung gebracht und arretiert werden. Hierzu ist es bekannt, an einer vorbestimmten Stelle eines beweglichen Getriebeteiles, wie beispielsweise einer Schalthülse, eine Bohrung auszubilden, welche in einer vorbestimmten Stellung des Getriebes mit einer Bohrung in einem Getriebegehäuse fluchtet. In dieser Stellung wird durch die Bohrung des Getriebegehäuses hindurch und in die Bohrung in der Schalthülse hinein ein Arretierstift gesteckt, welcher ein Schaltmittel im Getriebe in dieser Position arretiert. In dieser Position werden im Getriebe vorbestimmte Einstellungen vorgenommen und beispielsweise äußere Getriebeteile, wie ein Schaltgestänge mit Schalthebel, angeschlossen. Nach Fertigstellung dieser Arbeiten wird der Arretierstift entfernt, wodurch das Getriebeschaltmittel wieder freigegeben wird. Üblicherweise wird als Arretierstift ein herkömmlicher Stift verwendet, der nach den Getriebearbeiten bzw. -einstellungen in der vorbestimmten Stellung aus der Bohrung der Schalthülse herausgezogen werden muß. Um das Getriebe dann abzudichten muß anschließend ein Abdichtbolzen in der Bohrung des Getriebegehäuses montiert werden, dessen Montage oftmals schwierig ist, weil der Ort der Bohrung sehr schwer zugänglich ist. Ein Nachteil solcher Arretiervorrichtung besteht darin, daß sowohl das manuelle Herausziehen aus der Bohrung als auch das Eindrücken des Abdichtbolzens erforderlich sind. Wenn andererseits der Arretierstift versehentlich nicht aus der Bohrung entfernt und/oder der Abdichtbolzen danach nicht in die Bohrung eingeschoben wird, weil dies beispielsweise vergessen wird, ist das ganze Getriebe blockiert und/oder undicht.

Es wurden daher auch Arretierstifte verwendet, welche nach dem Entfernen aus der Bohrung der Schalthülse in der Bohrung des Getriebegehäuses festgehalten werden, so daß sie für weitere nachfolgende Fixiervorgänge, wie beispielsweise eine Nacheinstellung des Getriebes, bereit stehen. Hierzu umfassen diese Arretierstifte eine Feder, welche den Arretierstift in der entriegelten Position hält, sowie einen Dichtring, welcher die Bohrung in dem Getriebegehäuse, durch welche sich der Arretierstift erstreckt, abdichtet. Eine Verliersicherung in Form eines Widerhakens, welcher sich an einer Innenwandung des Getriebegehäuses abstützt, verhindert dabei ein vollständiges Herausfallen des Arretierstiftes aus der Bohrung im Getriebegehäuse bzw. bildet einen Anschlag für die Feder. Diese Arretiervorrichtung hat jedoch den Nachteil, daß der Arretierstift lediglich durch Reibkräfte in der Arretierstellung gehalten ist. Dementsprechend darf die Feder in Arretierstellung keine starken entriegelnde Kräfte auf den Arretierstift ausübende, sollte jedoch andererseits in entriegelter Stellung des Arretierstiftes diesen fest in entriegelter Position halten. Diese Bedingungen sind gegenläufig, so daß entweder der Arretierstift durch die zu stark dimensionierte Feder unbeabsichtigt aus der Arretierstellung ausgeschoben wird und so Einstell- und Anschlußarbeiten am Getriebe fehlerhaft ausgeführt werden, oder durch eine zu schwach dimensionierte Feder der Arretierstift unbeabsichtigt in die Arretierstellung rutscht und so das Getriebe blockiert.

Im Stand der Technik ist eine Arretiervorrichtung bekannt (DE 44 41 138 A1, die als nächstliegender Stand der Technik betrachtet wird), wo ein Arretierstift in einem Getriebegehäuse anordenbar ist, der gegen die Kraft einer Vorspannvorrichtung in das Getriebegehäuse hinein, nämlich in die Ausnehmung eines beweglichen Getriebeteils einschiebbar ist. Wie bereits oben erwähnt, weist der Arretierstift eine Verliersicherung in Form eines Widerhakens auf, die sich an der Innenwandung des Getriebegehäuses abstützt. Hierdurch ist ein vollständiges Herausfallen des Arretierstiftes verhindert. Allerdings wird dieser Arretierstift nur durch die entsprechenden Reibkräfte in der Arretierstellung gehalten, so dass die Feder einerseits in Arretierstellung des Arretierstiftes keine starken entriegelnden Kräfte auf den Arretierstift ausüben darf, andererseits diesen in entriegelter Stellung fest in der entriegelten Position halten sollte, was die bereits oben angesprochene Problematik zur Folge hat.

Weiterhin ist im Stand der Technik eine Arretiervorrichtung bekannt (DE 195 40 039 A1), die ebenfalls einen Arretierstift aufweist und zusätzlich auch eine Arretierhülse zur Führung des Arretierstiftes aufweist. Es sind Einrastmittel bzw. Rastmittel vorgesehen, die so zusammenwirken, dass der Arretierstift in einer eingeschobenen Stellung lösbar festgelegt ist. Hierzu weist die Hülse eine entlang des Umfangs ausgebildete Ausnehmung und der Arretierstift eine federartige Rastnase auf, der in diese Ausnehmung einrastbar ist. Die Einrastmittel bzw. das Rastmittel ist hier im wesentlichen als Feder -Rastnase/Ausnehmung ausgeführt. Zwar ist der Arretierstift in einer bestimmten Position in axialer Richtung fixiert bzw. festgelegt, allerdings nicht auch gleichzeitig in der Umfangsrichtung entsprechend festgelegt. Eine genaue Fixierung des Arretierstiftes in Arretierstellung in beide Richtungen ist hier aufgrund der Ausbildung der Einrast- bzw. Rastmittel nicht gegeben, was durchaus nachteilig ist, da hierdurch die exakte Fixierung des Getriebeteils problematisch sein kann.

Der vorliegenden Erfindung liegt daher die Aufgabe zugrunde, eine Arretiervorrichtung der oben genannten Art zur Verfügung zu stellen, wobei die oben genannten Nachteile vermieden sind und eine innere Schaltung des Getriebes zum Einstellen und Anschließen einer äußeren Schaltung auf einfache und grundsätzlicher Weise fixierbar ist.

Diese Aufgabe wird erfindungsgemäß durch eine Arretiervorrichtung der eingangs genannten Art mit den im Anspruch 1 kennzeichnenden Merkmalen gelöst. Vorteilhafte Ausgestaltungen der Erfindung sind in den abhängigen Ansprüchen angegeben.

Hierbei ist vorgesehen, dass eine Arretierhülse vorgesehen ist, in welcher der Arretierstift axial geführt ist, wobei die Arretierhülse ein Einrastmittel aufweist, welches mit einem am Arretierstift ausgebildeten Rastmittel derart zusammenwirkt, dass der Arretierstift in einer das Getriebe arretierenden, eingeschobenen Stellung lösbar festgelegt ist.

Dies hat den Vorteil, daß eine einfache Verriegelung und Entriegelung des Arretierstiftes erzielt wird, wobei der Arretierstift in Arretierstellung aktiv festgehalten ist und so ein unbeabsichtigtes Ausschieben aus der Arretierstellung heraus wirksam verhindert ist.

Eine einfache und betriebssichere Arretierung erzielt man dadurch, daß das Einrastmittel wenigstens eine in axialer Richtung verlaufende Ausnehmung in einer Wandung der Arretierhülse und das Rastmittel wenigstens einen sich seitlich am Arretierstift erhebenden und in die Ausnehmung greifenden Führungsstift umfaßt, wobei an einem dem Getriebe zugewandten Ende der Ausnehmung diese in Kraftwirkungsrichtung der Vorspannvorrichtung zurückgesetzt ausgebildet ist. Ferner ergibt sich im Bereich der zurückgesetzten Ausbildung der Ausnehmung eine Haltekante, welche den Führungsstift stabil in dem zurückgesetzten Bereich hält, wobei jedoch der Führungsstift zum Entriegeln und Zurückziehen des Arretierstiftes durch entsprechende Kraftaufwendung und leichtes Drehen des Arretierstiftes um dessen Längsachse einfach über diese Haltekante schiebbar ist.

Eine prozeßsichere Führung des Arretierstiftes mittels des Führungsstiftes in der Ausnehmung der Wandung der Arretierhülse mit sicher festlegendem Eingriff der Führungsstiftes in den zurückversetzten Abschnitt der Ausnehmung bei gleichzeitig einfacher Lösbarkeit dieser Festlegung des Arretierstiftes in einer Arretierstellung erzielt man dadurch, daß die wenigstens eine Ausnehmung unter einem vorbestimmten Winkel zu einer Achse der Arretierhülse in deren Wandung ausgebildet ist.

Eine direkte und exakte Arretierung des Getriebes in einer vorbestimmten Position erzielt man dadurch, daß das bewegliche Getriebeteil eine Schaltstange ist.

Eine einfache Bedienbarkeit des Einschiebens und Ausschiebens des Arretierstiftes erzielt man dadurch, daß der Arretierstift L-förmig ausgebildet ist.

Einen sicheren Sitz und eine exakte vorbestimmte Ausrichtung des Arretierstiftes erzielt man dadurch, daß die Arretierhülse wenigstens teilweise in einer Bohrung im Getriebegehäuse angeordnet ist.

In einer bevorzugten Ausführungsform ist die Vorspannvorrichtung eine Schraubenfeder.

Eine Abdichtung der Durchstoßstelle des Arretierstiftes durch das Gehäuse erzielt man dadurch, daß in einem in der Arretierhülse angeordneten Abschnitt des Arretierstiftes eine umlaufende Nut mit einem Dichtungsring vorgesehen ist.

Einen einfachen Aufbau mit symmetrisch auf den Arretierstift wirkenden Führungskräften erzielt man dadurch, daß der Führungsstift in einer Durchgangsbohrung im Arretierstift eingepreßt ist und sich beidseits des Arretierstiftes erhebt.

Entsprechende Abstützstellen für die Vorspannvorrichtung ohne zusätzliche Maßnahmen oder Elemente erzielt man dadurch, daß die Vorspannvorrichtung innerhalb der Arretierhülse zwischen dem Gehäuse und dem Rastmittel des Arretierstiftes angeordnet ist. Dadurch stützt sich die Vorspannvorrichtung an einem Ende am Getriebegehäuse und an einem entsprechend gegenüberliegenden Ende am Rastmittel des Arretierstiftes ab.

Zum Verhindern eines unbeabsichtigten Herausfallens des Arretierstiftes aus der Arretierhülse ist am Arretierstift eine Verliersicherung ausgebildet. Diese umfaßt zweckmäßigerweise eine innerhalb der Arretierhülse und um den Arretierstift herum angeordnete Scheibe, deren Durchmesser größer ist als eine Öffnung der Arretierhülse, oder einen Verliersicherungskonus in einem Abschnitt des Arretierstiftes umfaßt, welcher in der Arretierhülse geführt ist.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine Schnittansicht einer ersten bevorzugten Ausführungsform einer erfindungsgemäßen Arretiervorrichtung in Arretierstellung,
- Fig. 2: in gelöster Stellung,
- Fig. 3: eine Arretierhülse in perspektivischer Ansicht,
- Fig. 4: in einer Seitenansicht,
- Fig. 5: in einer Schnittansicht entlang Linie A-A von Fig. 4,
- Fig. 6: in einer Schnittansicht entlang Linie B-B von Fig. 5,
- Fig. 7: einen Arretierstift in Seitenansicht,
- Fig. 8: in einer Schnittansicht entlang Linie A-A von Fig. 7,
- Fig. 9: eine Schnittansicht einer zweiten bevorzugten Ausführungsform einer erfindungsgemäßen Arretiervorrichtung,
- Fig. 10: eine Aufsicht eines Sperrbleches der zweiten bevorzugten Ausführungsform von Fig. 9 in Richtung Pfeil R von Fig. 9,
- Fig. 11: eine Aufsicht eines Schaltdeckels eines Getriebes,
- Fig. 12: eine Schnittansicht entlang Linie A-A von Fig. 11 und
- Fig. 13: eine Schnittansicht entlang Linie E-E von Fig. 11.

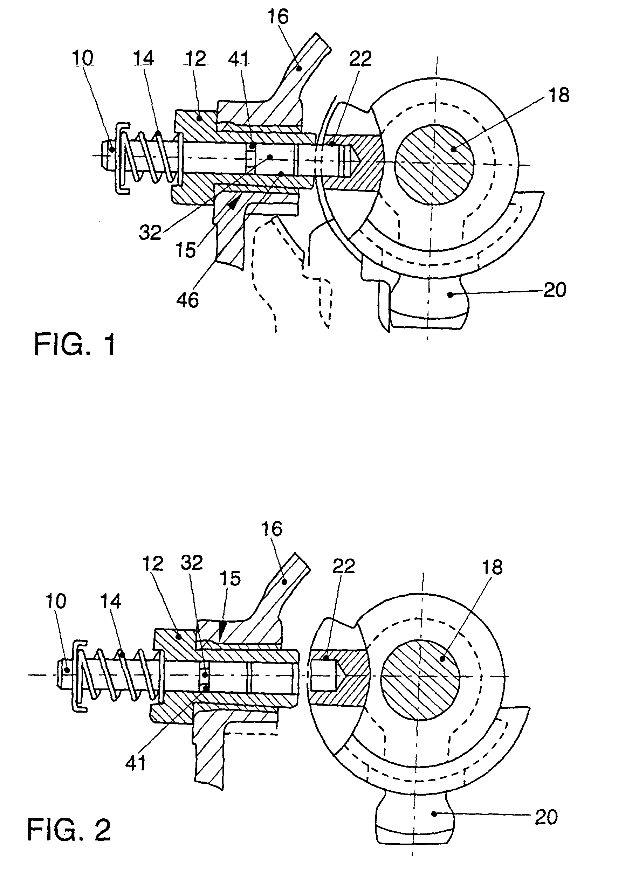

Die in Fig. 1 und 2 dargestellte erste bevorzugte Ausführungsform einer erfindungsgemäßen Arretiervorrichtung umfaßt einen Arretierstift 10, welcher in einer Arretierhülse 12 geführt und von einer Feder 14 vorgespannt ist. Die Arretierhülse 12 ist teilweise in einer Bohrung 15 eines Getriebegehäuses 16 angeordnet. In dem Getriebegehäuse 16 befindet sich eine Schaltwelle 18 mit einem Schaltfinger 20, welcher durch entsprechende axiale Translationsund Rotationsbewegungen der Schaltwelle 18 in nicht dargestellte Schaltmaule von nicht dargestellten Schaltstangen bzw. -schienen zum Ein- bzw. Ausrücken eines entsprechenden Ganges des Getriebes greift.

In der Schaltwelle 18 ist eine Bohrung 22 ausgebildet, welche in einer vorbestimmten Stellung der Schaltwelle 18 mit der Bohrung 15 im Getriebegehäuse 16 fluchtet. In dieser Stellung der Schaltwelle 18 ist der Arretierstift 10 derart in das Getriebe einschiebbar, daß er in die Bohrung 22 der Schaltwelle 18 greift und so diese bzgl. des Getriebegehäuses 16 festlegt, d.h. jede Bewegung der Schaltwelle 18 verhindert, wie in Fig. 1 dargestellt. In dieser Stellung ist das Getriebe somit arretiert, so daß diese Stellung des Arretierstiftes 10 nachfolgend als Arretierstellung bezeichnet wird. Zieht man den Arretierstift 10 jedoch zurück, dann gibt dieser die Schaltwelle 18 und damit das Getriebe wieder frei. Diese Stellung des Arretierstiftes 10 ist in Fig. 2 dargestellt und wird nachfolgend als Entriegelstellung bezeichnet.

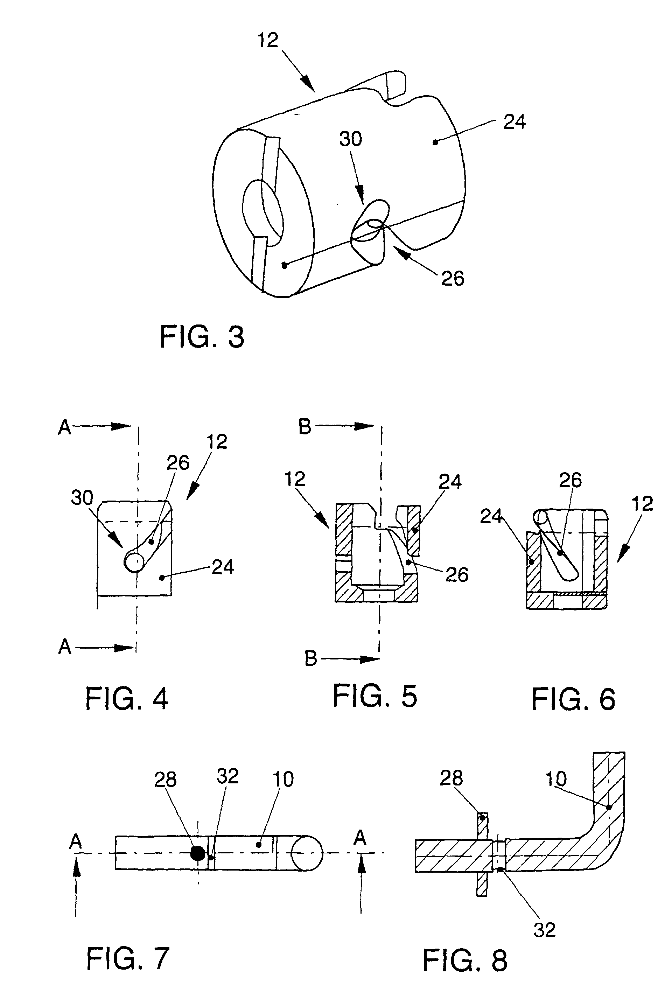

Die Festlegung des Arretierstiftes in Arretierstellung wird nachfolgend unter Bezugnahme auf die Fig. 3 bis 8 erläutert. Die in Fig. 3 bis 6 dargestellte Arretierhülse 12 umfaßt in einer Wandung 24 zwei unter einem Winkel zu einer Achse der Arretierhülse 12 ausgebildete Ausnehmungen 26, welche als Laufbahn für einen aus Fig. 7 und 8 ersichtlichen Führungsstift 28 dienen, welcher am Arretierstift 10 angeordnet ist. Dieser Führungsstift 26 ist beispielsweise durch eine Querbohrung im Arretierstift 10 eingepreßt. Beim Einschieben des Arretierstiftes 10 in Richtung Arretierstellung wird somit der L-förmig ausgebildete Arretierstift 10 in der Arretierhülse 12 über den in den Ausnehmungen 26 laufenden Führungsstift 28 geführt und wie ein Hebel gedreht. Sobald der Führungsstift 28 an einem Ende, d.h. in Arretierstellung, angelangt ist, weisen die Ausnehmungen bzw. Laufbahnen 26 einen zurückgesetzten Wandabschnitt 30 auf. Dieser Wandabschnitt 30 ist in Kraftwirkungsrichtung der Feder 14 zurückversetzt, so daß die Feder 14 den eingerasteten Zustand des Führungsstiftes 28 in dem zurückgesetzten Wandabschnitt 30 durch die Federkraft festlegt. Zum Entriegeln muß der Führungsstift 28 aus dem zurückgesetzten Wandabschnitt 30 heraus über eine Haltekante 32 hinweg durch entsprechende Kraftaufwendung am Hebel des Arretierstiftes 10 verschoben werden. Sobald sich der Führungsstift 28 außerhalb des zurückgesetzten Wandabschnittes 30 befindet sorgt bereits allein die Federkraft für eine weitere axiale Verschiebung des Arretierstiftes 10 in Entriegelstellung.

Auf diese Weise ist steht der Arretierstift 10 für mehrere Arretieroperationen zur Verfügung und verbleibt auch nach Beendigung aller Einstellungen am Getriebe in der Bohrung 15. Zur Abdichtung ist am Arretierstift 10 eine umlaufende Nut 32 ausgebildet (Fig. 8), in der beispielsweise ein O-Ring als Dichtung angeordnet ist.

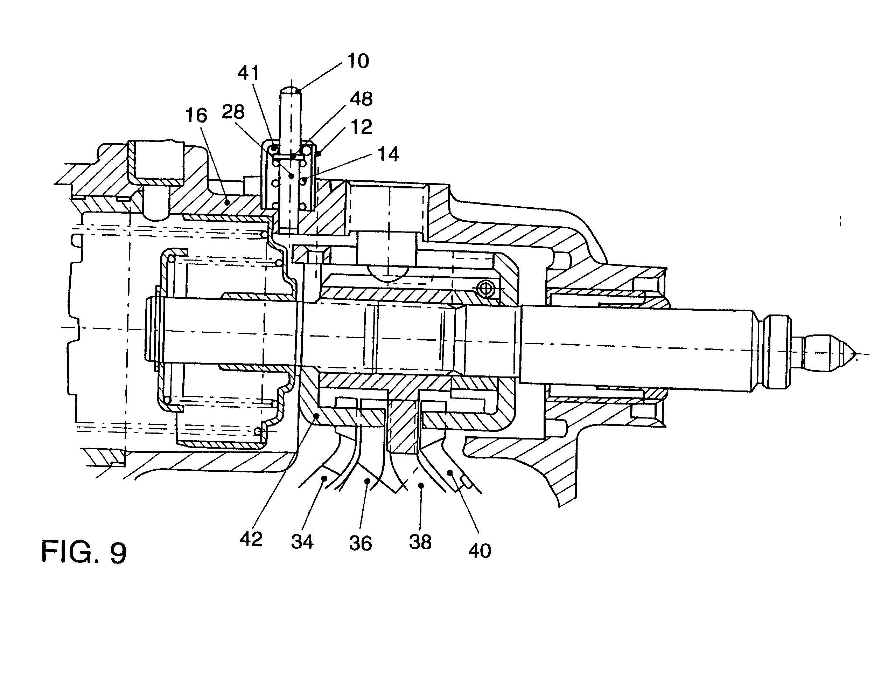

Fig. 9 zeigt eine zweite bevorzugte Ausführungsform einer erfindungsgemäßen Arretiervorrichtung. Gleiche Teile sind mit gleichen Bezugsziffern bezeichnet, so daß für deren Erläuterung auf obige Ausführungen zu Fig. 1 bis 8 verwiesen werden kann. Aus der Darstellung von Fig. 9 sind zusätzlich Schaltmaule 34, 36, 38 und 40 erkennbar, jeweils für den Rückwärtsgang, für den 1./2. Gang, für den 3./4. Gang und für den 5. Gang. Ferner ist der Dichtring 41 erkennbar.

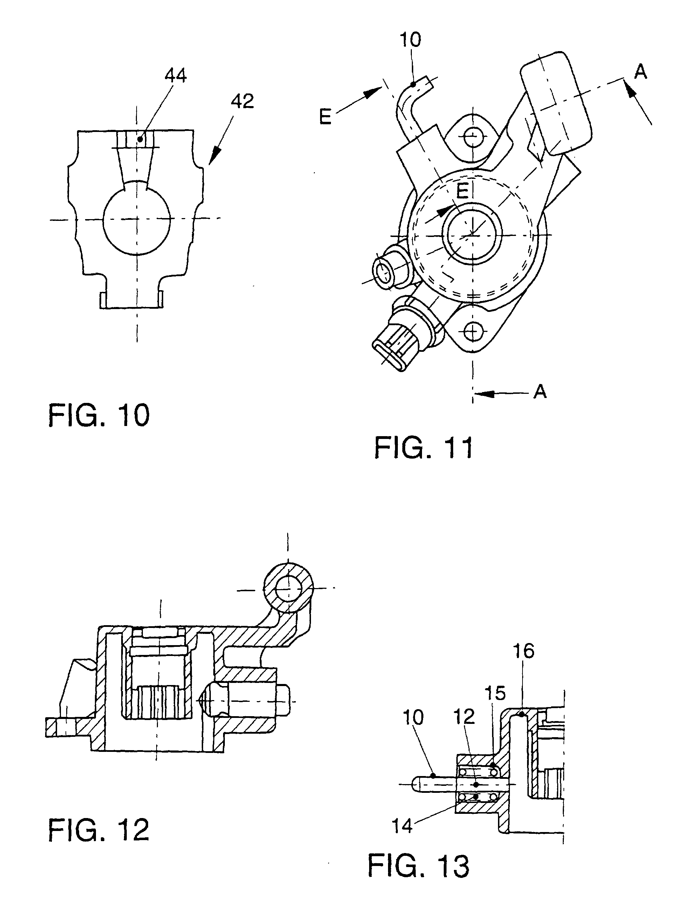

Diese Arretiervorrichtung unterscheidet sich von der zuvor beschriebenen im wesentlichen dadurch, daß die Vorspannvorrichtung in Form einer Feder 14 in der Arretierhülse 12 zwischen dem Getriebegehäuse 16 und dem Führungsstift 28 angeordnet ist. Ferner ist statt einer Bohrung in der Schaltwelle 18 ein Sperrblech 42 fest mit der Schaltwelle 18 verbunden, welches, wie aus Fig. 10 ersichtlich, eine Ausnehmung 44 Aufweist; welche in einer vorbestimmten Stellung der Schaltwelle 18 mit der Bohrung 15 des Getriebegehäuses 16 fluchtet. Dementsprechend greift in Arretierstellung der Arretierstift 10 in diese Ausnehmung 44.

Fig. 11 bis 13 zeigen die Anordnung einer erfindungsgemäßen Arretiervorrichtung an einem Schaltdeckel 46. Gleiche Teile sind mit gleichen Bezugsziffern bezeichnet, so daß für deren Erläuterung auf obige Ausführungen zu Fig. 1 bis 10 verwiesen werden kann.

In allen Ausführungsformen sorgt eine Verliersicherung dafür, daß der Arretierstift 10 nicht aus der Arretierhülse 12 vollständig herausfallen kann. In Fig. 1 und 2 ist dies ein Verliersicherungskonus 46 in einem Abschnitt des Arretierstiftes 10, der in der Arretierhülse geführt ist. In Fig. 9 ist dies eine Verliersicherung in Form eines Ringes bzw. einer Scheibe 48, welche einen größeren Durchmesser hat als eine Öffnung 50 der Arretierhülse 12 an einem Ende axial in Kraftwirkungsrichtung der Feder 14. Die Feder 14 stützt sich an einer Seite entweder am Führungsstift 28 oder am Ring 48 ab.

### BEZUGSZEICHENLISTE

- 10: Arretierstift
- 12: Arretierhülse
- 14: Feder
- 15: Bohrung in Getriebegehäuse
- 16: Getriebegehäuse
- 18: Schaltwelle
- 20: Schaltfinger
- 22: Bohrung in Schaltwelle
- 24: Wandung der Arretierhülse
- 26: Ausnehmungen
- 28: Führungsstift
- 30: zurückgesetzter Wandabschnitt
- 32: umlaufende Nut am Arretierstift
- 34: Schaltmaul
- 36: Schaltmaul
- 38: Schaltmaul
- 40: Schaltmaul
- 41: Dichtring
- 42: Sperrblech
- 44: Ausnehmung
- 46: Verliersicherungskonus
- 48: Ring

## Patentansprüche

1. Arretiervorrichtung für ein Getriebe, insbesondere für ein Kraftfahrzeuggetriebe, mit einem in einem Getriebegehäuse (16) angeordneten Arretierstift (10), welcher wahlweise gegen eine Kraft einer Vorspannvorrichtung (14) in das Getriebegehäuse (16) hinein in eine Ausnehmung (22) eines beweglichen Getriebeteils (18) einschiebbar ist, wobei eine Arretierhülse (12) vorgesehen ist, in welcher der Arretierstift (10) axial geführt ist, und wobei die Arretierhülse (12) ein Einrastmittel aufweist, welches mit einem am Arretierstift (10) ausgebildeten Rastmittel derart zusammenwirkt, dass der Arretierstift (10) in einer das Getriebe arretierenden, eingeschobenen Stellung lösbar festgelegt ist, **dadurch gekennzeichnet, dass** das Einrastmittel wenigstens eine in axialer Richtung verlaufende Ausnehmung (26) in einer Wandung (24) der Arretierhülse (12) und das Rastmittel wenigstens einen sich seitlich am Arretierstift (10) erhebenden und in die Ausnehmung greifenden Führungsstift (28) umfasst, wobei an einem dem Getriebe zugewandten Ende der Ausnehmung (26) diese in Kraftwirkungsrichtung der Vorspannvorrichtung (14) zurückgesetzt ausgebildet ist.

2. Arretiervorrichtung nach Anspruch 1,
**dadurch gekennzeichnet, daß**
die wenigstens eine Ausnehmung (26) unter einem vorbestimmten Winkel zu einer Achse der Arretierhülse (12) in deren Wandung (24) ausgebildet ist.

3. Arretiervorrichtung nach einem der vorhergehenden Ansprüche,
**dadurch gekennzeichnet, daß**
das bewegliche Getriebeteil eine Schaltstange (18) ist.

4. Arretiervorrichtung nach einem der vorhergehenden Ansprüche,
**dadurch gekennzeichnet, daß**
der Arretierstift (10) L-förmig ausgebildet ist.

5. Arretiervorrichtung nach einem der vorhergehenden Ansprüche,
**dadurch gekennzeichnet, daß**
die Arretierhülse (12) wenigstens teilweise in einer Bohrung (15) im Getriebegehäuse (16) angeordnet ist.

6. Arretiervorrichtung nach einem der vorhergehenden Ansprüche,
**dadurch gekennzeichnet, daß**
die Vorspannvorrichtung eine Schraubenfeder (14) ist.

7. Arretiervorrichtung nach einem der vorhergehenden Ansprüche,
**dadurch gekennzeichnet, daß**
in einem in der Arretierhülse (12) angeordneten Abschnitt des Arretierstiftes (10) eine umlaufende Nut (32) mit einem Dichtungsring (41) vorgesehen ist.

8. Arretiervorrichtung nach einem der vorhergehenden Ansprüche,
**dadurch gekennzeichnet, daß**
der Führungsstift (28) in einer Durchgangsbohrung im Arretierstift (10) eingepreßt ist und sich beidseits des Arretierstiftes (10) erhebt.

9. Arretiervorrichtung nach einem der vorhergehenden Ansprüche,
**dadurch gekennzeichnet, daß**
die Vorspannvorrichtung (14) innerhalb der Arretierhülse (12) zwischen dem Getriebegehäuse (16) und dem Rastmittel (28) des Arretierstiftes (10) angeordnet ist.

10. Arretiervorrichtung nach einem der vorhergehenden Ansprüche,
**dadurch gekennzeichnet, daß**
am Arretierstift (10) eine Verliersicherung (46;48) ausgebildet ist.

11. Arretiervorrichtung nach Anspruch 10,
**dadurch gekennzeichnet, daß**
die Verliersicherung eine innerhalb der Arretierhülse (12) und um den Arretierstift (10) herum angeordnete Scheibe (48) umfaßt, deren Durchmesser größer ist als eine Öffnung (50) der Arretierhülse (12).

12. Arretiervorrichtung nach Anspruch 10,
**dadurch gekennzeichnet, daß**
die Verliersicherung einen Verliersicherungskonus (46) in einem Abschnitt des Arretierstiftes (10) umfaßt, welcher in der Arretierhülse (12) geführt ist.

## Claims

1. Locking device for a transmission, in particular a motor vehicle transmission, having a locking pin (10) which is arranged in a transmission housing (16) and can be inserted by choice counter to a force of a prestressing device (14) into the transmission housing (16), into a recess (22) in a movable transmission part (18), a locking sleeve (12) being provided, in which the locking pin (10) is guided axially, and the locking sleeve (12) having a snap-in means which interacts with a latching means, which is formed on the locking pin (10), in such a manner that the locking pin (10) is fixed releasably in a pushed-in position in which it locks the transmission, **characterized in that** the snap-in means comprises at least one recess (26) running in the axial direction in a wall (24) of the locking sleeve (12), and the latching means comprises at least one guide pin (28) which is raised at the side of the locking pin (10) and engages in the recess, the recess (26) being designed, at its end which faces the transmission, in a manner such that it is set back in the direction of action of force of the prestressing device (14).

2. Locking device according to Claim 1, **characterized in that** the at least one recess (26) is formed in the wall (24) of the locking sleeve (12) at a predetermined angle with respect to an axis of the said locking sleeve.

3. Locking device according to one of the preceding claims, **characterized in that** the movable transmission part is a selector rod (18).

4. Locking device according to one of the preceding claims, **characterized in that** the locking pin (10) is of L-shaped design.

5. Locking device according to one of the preceding claims, **characterized in that** the locking sleeve (12) is at least partially arranged in a hole (15) in the transmission housing (16).

6. Locking device according to one of the preceding claims, **characterized in that** the prestressing device is a helical spring (14).

7. Locking device according to one of the preceding claims, **characterized in that** an encircling groove (32) having a sealing ring (41) is provided in a section of the locking pin (10) which section is arranged in the locking sleeve (12).

8. Locking device according to one of the preceding claims, **characterized in that** the guide pin (28) is pressed into a passage hole in the locking pin (10) and is raised on both sides of the locking pin (10).

9. Locking device according to one of the preceding claims, **characterized in that** the prestressing device (14) is arranged within the locking sleeve (12) between the transmission housing (16) and the latching means (28) of the locking pin (10).

10. Locking device according to one of the preceding claims, **characterized in that** a loss-prevention means (46; 48) is formed on the locking pin (10).

11. Locking device according to Claim 10, **characterized in that** the loss-prevention means comprises a disc (48) which is arranged within the locking sleeve (12) and around the locking pin (10) and the diameter of which is larger than an opening (50) in the locking sleeve (12).

12. Locking device according to Claim 10, **characterized in that** the loss-prevention means comprises a loss-prevention cone (46) in a section of the locking pin (10) which is guided in the locking sleeve (12).

## Revendications

1. Dispositif d'arrêt pour une transmission, en particulier pour une transmission de véhicule automobile, comprenant une tige d'arrêt (10) disposée dans un carter de transmission (16), laquelle peut être enfoncée de manière sélective à l'encontre d'une force d'un dispositif de précontrainte (14) dans le carter de transmission (16) dans un logement (22) d'une partie de transmission mobile (18), une douille d'arrêt (12) étant prévue, dans laquelle la tige d'arrêt (10) est guidée axialement, et la douille d'arrêt (12) présentant un moyen d'encliquetage qui coopère avec un moyen de cliquet réalisé sur la tige d'arrêt (10), de telle sorte que la tige d'arrêt (10) soit fixée de manière desserrable dans une position enfoncée, bloquant la transmission, **caractérisé en ce que** le moyen d'encliquetage comprend au moins un logement (26) s'étendant dans la direction axiale dans une paroi (24) de la douille d'arrêt (12) et le moyen de cliquet comprend au moins une tige de guidage (28) se dressant latéralement sur la tige d'arrêt (10) et venant en prise dans le logement, le logement (26), à son extrémité tournée vers la transmission, étant réalisé en retrait dans la direction d'action de la force du dispositif de précontrainte (14).

2. Dispositif d'arrêt selon la revendication 1, **caractérisé en ce que** l'au moins un logement (26) est réalisé suivant un angle prédéfini par rapport à un axe de la douille d'arrêt (12) dans la paroi (24) de cette dernière.

3. Dispositif d'arrêt selon l'une quelconque des revendications précédentes, **caractérisé en ce que** la partie de transmission mobile est une tringle de changement de vitesses (18).

4. Dispositif d'arrêt selon l'une quelconque des revendications précédentes, **caractérisé en ce que** la tige d'arrêt (10) est réalisée en forme de L.

5. Dispositif d'arrêt selon l'une quelconque des revendications précédentes, **caractérisé en ce que** la douille d'arrêt (12) est disposée au moins partiellement dans un alésage (15) dans le carter de transmission (16).

6. Dispositif d'arrêt selon l'une quelconque des revendications précédentes, **caractérisé en ce que** le dispositif de précontrainte est un ressort à boudin (14).

7. Dispositif d'arrêt selon l'une quelconque des revendications précédentes, **caractérisé en ce que** dans une portion de la tige d'arrêt (10) disposée dans la douille d'arrêt (12), il est prévu une rainure périphérique (32) avec une bague d'étanchéité (41).

8. Dispositif d'arrêt selon l'une quelconque des revendications précédentes, **caractérisé en ce que** la tige de guidage (28) est pressée dans un alésage traversant dans la tige d'arrêt (10) et se dresse de part et d'autre de la tige d'arrêt (10).

9. Dispositif d'arrêt selon l'une quelconque des revendications précédentes, **caractérisé en ce que** le dispositif de précontrainte (14) est disposé à l'intérieur de la douille d'arrêt (12) entre le carter de transmission (16) et le moyen de cliquet (28) de la tige d'arrêt (10).

10. Dispositif d'arrêt selon l'une quelconque des revendications précédentes, **caractérisé en ce qu'**une protection contre la perte (46 ; 48) est réalisée sur la tige d'arrêt (10).

11. Dispositif d'arrêt selon la revendication 10, **caractérisé en ce que** la protection contre la perte comprend un disque (48) disposé à l'intérieur de la douille d'arrêt (12) et tout autour de la tige d'arrêt (10), dont le diamètre est supérieur à une ouverture (50) de la douille d'arrêt (12).

12. Dispositif d'arrêt selon la revendication 10, **caractérisé en ce que** la protection contre la perte comprend un cône de protection contre la perte (46) dans une portion de la tige d'arrêt (10), lequel est guidé dans la douille d'arrêt (12).
